# FASCICULE DE BREVET EUROPEEN

(11) **EP 2 387 548 B1**
(45) Date de publication et mention de la délivrance du brevet: **17.08.2016**
(21) Numéro de dépôt: 10707310.8
(22) Date de dépôt: 18.01.2010
(51) Int. Cl.: C02F 1/00, C02F 103/00, C02F 3/00, C02F 3/04, C02F 3/28

(54) **METHODE DE DIAGNOSTIC DU FONCTIONNEMENT D'UN SYSTEME D'EPURATION D'EAU DE TYPE DISPOSITIF A MILIEU FILTRANT ET OUTIL DE DIAGNOSTIC ADAPTE A CETTE METHODE**
VERFAHREN ZUR DIAGNOSE DES BETRIEBS EINES WASSERREINIGUNGSSYSTEMS, UMFASSEND EINE VORRICHTUNG MIT EINEM FILTERMEDIUM UND DIAGNOSTISCHES WERKZEUG DAFÜR
METHOD FOR DIAGNOSING THE OPERATION OF A WATER PURIFICATION SYSTEM COMPRISING A DEVICE WITH A FILTERING MEDIUM AND DIAGNOSTIC TOOL SUITABLE FOR SAID METHOD

(30) Priorité: 19.01.2009 FR 0950287
(43) Date de publication de la demande: 23.11.2011
(73) Titulaire: Veolia Eau - Compagnie Generale Des Eaux, 92000 Nanterre (FR); Centre National Du Machinisme Agricole, Du Genie Rural Des Eaux Et Des Forets (Cemagref), 92160 Antony (FR); Université Blaise Pascal Clermont II, 63006 Clermont Ferrand Cedex 1 (FR)
(72) Inventeur: VIGNOLES, Christian, F-31700 Blagnac (FR); MOLLE, Pascal, F-69001 Lyon (FR); LIENARD, Alain, F-69480 Anse (FR); ROLLAND, Laurence, F-69300 Caluire et Cuire (FR); BREUL, Pierre, F-63730 Corent (FR); BOUTELDJA, Fathe, F-25000 Constantine (FR); BOISSIER, Daniel, F-07230 Payzac (FR)
(74) Mandataire: Joanny, Damien Henri Xavier
(86) Numéro de dépôt international: PCT/FR2010/050066
(87) Numéro de publication internationale: WO 2010/082002

(56) Documents cités:
- DE-A1-102007 007 894

## Description

La présente invention porte sur une méthode de diagnostic du fonctionnement d'un système d'épuration d'eau de type dispositif à milieu filtrant et sur l'outil de diagnostic adapté à cette méthode. Un tel système d'épuration d'eau de type dispositif à milieu filtrant, par exemple un dispositif à milieu filtrant vertical et en particulier un filtre à sable, est utilisé en tant que dispositif de traitement par le sol des eaux usées domestiques provenant d'un pré-traitement généralement anaérobie.

Le traitement réalisé par ces systèmes d'épuration d'eau sur milieu filtrant repose sur l'action des microorganismes naturellement présents dans les eaux usées (biomasse), en l'occurrence des bactéries qui se fixent sur le milieu filtrant du dispositif (par exemple le sable du filtre), pour dégrader la pollution (traitement de type aérobie à cultures fixées sur supports fins).

Après traitement, les eaux usées domestiques traitées sont soit infiltrées dans le sol en place ou reconstitué (filtre à sable non drainé), soit évacuées par un réseau de collecte vers un exutoire (filtre à sable drainé).

On utilise ces systèmes d'épuration d'eau de type dispositif à milieu filtrant tout particulièrement dans les systèmes d'assainissement non collectifs (ANC) ou autonomes, pour les eaux usées domestiques des immeubles non raccordés au réseau public d'assainissement, ce qui concerne principalement des maisons ou des immeubles comprenant jusqu'à dix pièces principales.

En France, ces types de systèmes d'assainissement sont notamment réglementés par l'arrêté du 6 mai 1996 et par la norme XP DTU 64.1 décrivant des prescriptions techniques applicables qui sont constituées de l'indication de moyens à mettre en oeuvre.

Cependant, la mise en place de ces prescriptions techniques ne constitue pas à elle seule la garantie du bon fonctionnement du système d'épuration, et en particulier ne permet pas de prévenir une dégradation des conditions de fonctionnement dans le temps.

De plus, ces systèmes d'épuration ne respectent pas forcément les exigences environnementales (l'arrêté du 6 mai 1996 fixe une qualité minimale requise pour le rejet, constatée à la sortie du dispositif d'épuration sur un échantillon représentatif, de deux heures non décanté, qui est de 30 mg par litre pour les matières en suspension (MES) et de 40 mg par litre pour la demande biochimique en oxygène sur cinq jours (DB05)).

A ce jour, les seuls diagnostics proposés reposent sur les manifestations externes (odeurs, mousses, couleur, reflux hydraulique), et ne permettent pas de savoir exactement pourquoi ces anomalies sont constatées, alors que les origines sont à rechercher au sein même du dispositif à milieu filtrant.

La présente invention se propose de fournir une méthode de diagnostic in situ et non destructrice qui permette d'évaluer les performances épuratoires d'un système d'épuration d'eau de type dispositif à milieu filtrant, et en particulier d'un filtre à sable, notamment un filtre à sable vertical.

A cet effet, selon la présente invention, la méthode de diagnostic du fonctionnement d'un système d'épuration d'eau sur milieu filtrant, le matériau du milieu filtrant étant constitué de particules, comporte les étapes suivantes :
- une étape de caractérisation d'au moins un paramètre physique et/ou mécanique du dispositif à milieu filtrant permettant d'établir une valeur de perméabilité,
- une étape de comparaison entre ladite valeur de perméabilité établie et une plage de valeurs de perméabilité prédéterminée représentative d'un état de fonctionnement satisfaisant du système d'épuration, et
- une étape de diagnostic au cours de laquelle on attribue un indicateur du fonctionnement du dispositif à milieu filtrant en fonction du résultat de l'étape de comparaison.

Les travaux menés par les demanderesses ont permis de déterminer les caractéristiques de bon fonctionnement d'un dispositif à milieu filtrant ou filtre d'ANC, en particulier pour un filtre à sable vertical.

Pour qu'un filtre à sable vertical fonctionne bien, il ne faut pas (ces prescriptions sont applicables à d'autres milieux filtrants que le sable) :
- une perméabilité trop forte car le passage trop rapide des effluents entraîne de mauvaises performances épuratoires. De fortes perméabilités vont générer des écoulements localisés, rapides, nuisibles aux performances épuratoires (temps de contact trop court, décrochage de biomasse ...)
- une perméabilité trop faible sinon la durée de vie du filtre à sable est trop courte (colmatage précoce). Au contraire, des perméabilités fortes, les perméabilités trop faibles du matériau vierge vont induire des risques d'engorgement du massif par la biomasse pouvant conduire à un fonctionnement en anaérobiose du système et à un colmatage prématuré de ce dernier.

La perméabilité du filtre est en particulier fonction :
- des caractéristiques physiques du matériau constituant le filtre à sable : la courbe granulométrique donne des valeurs représentatives de la répartition granulométrique du matériau (d, D, Cu,...) ;
- des conditions de mise en oeuvre du sable dans le filtre : l'état de serrage ou compacité du matériau constituant le filtre à sable défini à partir de la densité (γ), de la porosité (n) ou de l'indice des vides (e) ;
- de la forme des particules : un sable concassé vierge issu d'une carrière retient plus d'eau capillaire qu'un sable alluvionnaire dit roulé, d'où une colonisation plus rapide par la biomasse bactérienne ; et
- de la réunion d'un certain nombre de conditions permettant le bon développement de l'action biochimique et de la création de biomasse (teneur en gaz, notamment en oxygène dans le sable).

De cette manière, on comprend que par la mesure et/ou l'établissement d'un ou plusieurs paramètres physique et/ou mécanique du dispositif à milieu filtrant, mais éventuellement en outre d'un paramètre représentatif de l'activité microbiologique du dispositif à milieu filtrant, on établit une ou plusieurs valeurs de perméabilité (il s'agit de la perméabilité dite « saturée », ks, exprimée en m/s).

En fonction des situations rencontrées et des paramètres déjà connus par ailleurs du dispositif à milieu filtrant, le procédé selon l'invention permet de compléter les informations déjà disponibles sur ce dispositif à milieu filtrant, et par utilisation de modèles analytiques et de courbes de corrélation résultant de très nombreux tests et mesures effectués sur le terrain et en laboratoire dans les multiples conditions de mise en oeuvre possibles, d'obtenir une ou plusieurs valeurs de perméabilité.

Cette ou ces valeurs de perméabilité attachées au dispositif à milieu filtrant dont on cherche à évaluer les performances épuratoires, vont permettre d'établir un diagnostic sur le bon ou le mauvais fonctionnement du dispositif à milieu filtrant.

L'étape de diagnostic résulte de l'étape de comparaison entre d'une part chaque valeur de perméabilité établie k₁ ou bien la plage de valeurs regroupant tout ou partie des valeurs de perméabilité établies [k_{1 min} ; k_{1 max}] ou bien encore la moyenne des valeurs de perméabilité établies et d'autre part la plage de valeurs de perméabilité prédéterminée [kₘᵢₙ ; kₘₐₓ] représentative d'un état de fonctionnement satisfaisant du système d'épuration (il s'agit d'un intervalle optimum de bonnes performances épuratoires).

Ainsi trois cas de figures se présentent :
- Cas A, aucun recoupement entre les plages de valeurs, soit [k_{1 min} ; k_{1 max}] ∩ [kₘᵢₙ ; kₘₐₓ] = 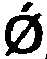 , alors le matériau de ce dispositif à milieu filtrant est considéré comme inutilisable à titre de système d'épuration ou ayant une efficacité et/ou une espérance de vie trop limitée ;
- Cas B, égalité ou recouvrement total entre les plages de valeurs, soit [k_{1 min} ; k_{1 max}] ⊂ ou = [kₘᵢₙ ; kₘₐₓ], c'est-à-dire [k_{1 min} ; k_{1 max}] inclus dans ou identique à [kₘᵢₙ ; kₘₐₓ], alors le matériau de ce dispositif à milieu filtrant est considéré comme tout à fait utilisable à titre de système d'épuration ; et
- Cas C, simple chevauchement partiel entre les plages de valeurs, soit [k_{1 min} ; k_{1 max}] ⊂ [kₘᵢₙ ; kₘₐₓ] ≠ 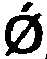 , alors le matériau de ce dispositif à milieu filtrant est considéré comme utilisable à titre de système d'épuration sous certaines conditions de mise en oeuvre.

Un indice de bon fonctionnement simplifié, par exemple à trois niveaux, peut être associé au résultat de ce diagnostic : par exemple des mentions telles que « non », « oui/non », et « oui » ou des valeurs telles que « -1 », « 0 » et « 1 » ou des couleurs telles que « rouge », « orange » et « vert » respectivement représentatives d'un mauvais fonctionnement, d'un fonctionnement à risque ou limité que l'on ne peut qualifier ni de bon ni de mauvais, et d'un bon fonctionnement.

Il faut souligner que les travaux menés par les demanderesses ont permis de déterminer, en tenant notamment compte des performances épuratoires conformes à la réglementation en vigueur et des conditions de bon développement de la biomasse, des seuils optimums de perméabilité de fonctionnement d'un dispositif à milieu filtrant [kₘᵢₙ ; kₘₐₓ] définissant l'intervalle optimum de bonnes performances épuratoires.

Selon l'invention, la plage de valeurs de perméabilité prédéterminée représentative d'un état de fonctionnement satisfaisant appartient à l'intervalle défini par 0,3 10⁻⁵< Ks (m/s)< 0,8 10⁻².

Ainsi, dans [kₘᵢₙ ; kₘₐₓ], on prend comme seuil minimal de perméabilité kₘᵢₙ = 0,3 10⁻⁵m/s et de préférence kₘᵢₙ = 1 10⁻⁵m/s, ou encore kₘᵢₙ = 3 10⁻⁵m/s et comme seuil maximal de perméabilité kₘₐₓ=0,8 10⁻² m/s, et de façon préférentielle kₘₐₓ=0,6 10⁻² m/s ou encore kₘₐₓ=0,5 10⁻² m/s.

Selon une disposition avantageuse de la présente invention, la méthode de diagnostic comprend la mise en oeuvre des étapes de caractérisation et de comparaison en plusieurs emplacements du dispositif à milieu filtrant, ce par quoi on obtient plusieurs indicateurs du fonctionnement du dispositif à milieu filtrant afin d'établir un diagnostic global du dispositif à milieu filtrant.

Ainsi, on privilégie le fait de se placer en différents emplacements du dispositif à milieu filtrant pour établir la perméabilité associée en chacun de ces emplacements puis l'indicateur correspondant de (bon/mauvais) fonctionnement du dispositif à milieu filtrant. De cette façon, à partir des différentes valeurs de perméabilité établies, on obtient un diagnostic du dispositif à milieu filtrant plus proche de son fonctionnement réel d'ensemble.

Egalement, de préférence, l'étape de caractérisation comprend la détermination d'au moins deux paramètres physiques et/ou mécaniques représentatifs de l'état local du matériau du dispositif à milieu filtrant. En particulier, le paramètre physique représentatif de l'état local du matériau du dispositif à milieu filtrant appartient au groupe comprenant l'état de serrage (ou compacité), l'état de colmatage, l'état de saturation, la granulométrie, la forme des grains (ou plus généralement des particules constituant le matériau du milieu filtrant), la classe minéralogique du matériau constituant le milieu filtrant et le pourcentage de fines (particules de dimensions plus faible qu'un seuil prédéterminé) constituant le milieu filtrant.

On parle de colmatage partiel lorsque l'eau ne passe qu'à faible flux dans le milieu filtrant du fait que la plupart des vides laissés entre les particules du milieu filtrant (par exemple les grains de sable) sont en partie remplis de matières en suspension (MES) (colmatage physique) et/ou de colonies de bactéries (colmatage biologique).

On parle de colmatage total lorsque tous les vides laissés entre les particules du milieu filtrant (par exemple les grains de sable) sont remplis de fines, de biomasse et éventuellement d'eau libre.

En présence de colmatage, il existe une tendance à la baisse de la perméabilité, laquelle peut alors être inférieure à kₘᵢₙ et dans un cas extrême atteindre un niveau de perméabilité quasi nul.

Selon une autre disposition préférentielle de l'invention, l'étape de caractérisation comprend la détermination d'au moins un paramètre physique et géométrique représentatif de l'état de fonctionnement du dispositif à milieu filtrant. Notamment, le paramètre physique et géométrique représentatif de l'état de fonctionnement du dispositif à milieu filtrant appartient au groupe comprenant le profil de résistivité, l'épaisseur du milieu filtrant et la surface du dispositif à milieu filtrant.

Avantageusement, la méthode de diagnostic comprend en outre une étape de caractérisation d'au moins un paramètre représentatif de l'activité microbiologique du dispositif à milieu filtrant, lequel paramètre représentatif de l'activité microbiologique du dispositif à milieu filtrant est également pris en compte dans l'établissement de la valeur de perméabilité Ks (m/s).

En particulier, le paramètre représentatif de l'activité microbiologique du dispositif à milieu filtrant appartient au groupe comprenant la teneur en oxygène, la teneur en dioxyde de carbone, la teneur en nitrates et la teneur en sels ammoniacaux, la teneur en oxygène et la teneur en dioxyde de carbone étant mesurées dans la porosité du milieu filtrant et la teneur en nitrates et la teneur en sels ammoniacaux étant mesurées dans l'eau prélevée à l'intérieur du dispositif à milieu filtrant ou à sa sortie.

Selon une disposition préférentielle de la présente invention, le dispositif à milieu filtrant du système d'épuration d'eau est un filtre à sable, qu'il soit vertical ou horizontal.

La présente invention porte en outre sur un outil de diagnostic adapté à la mise en oeuvre de la méthode de diagnostic précédemment décrite. A cet effet, on propose un outil de diagnostic qui comprend des moyens de caractérisation d'au moins un paramètre physique et/ou mécanique du dispositif à milieu filtrant comportant :
- un endoscope, et/ou
- un pénétromètre, et
un système d'analyse et de traitement des informations issues des moyens de caractérisation, apte à établir une valeur de perméabilité et à la comparer avec une plage de valeurs de perméabilité prédéterminée représentative d'un état de fonctionnement satisfaisant du système d'épuration, et à attribuer un indicateur du fonctionnement du dispositif à milieu filtrant en fonction du résultat de l'étape de comparaison.

On comprend que le système d'analyse et de traitement des informations comporte des moyens de calcul associant des modèles analytiques et des courbes d'étalonnage issues des données expérimentales et relatives aux différents types de milieux filtrants utilisés et aux différentes conditions de mise en place de ce milieu filtrant, et ce afin de permettre d'établir une valeur de perméabilité associée aux résultats fournis par les moyens de caractérisation du dispositif à milieu filtrant, à savoir en particulier l'endoscope et/ou le pénétromètre.

De préférence, les moyens de caractérisation comprennent en outre un résistivimètre à électrodes.

Selon une autre disposition préférentielle, les moyens de caractérisation comprennent en outre un système d'échantillonnage et d'analyse de gaz du sol.

De préférence, les moyens de caractérisation comprennent en outre des bandelettes semi-quantitatives aptes à mesurer, dans l'eau prélevée à la sortie du dispositif à milieu filtrant, la teneur en nitrates et la teneur en sels ammoniacaux.

Ainsi, on comprend que l'outil de diagnostic étant équipé de différents appareils et/ou matériels à titre de moyens de caractérisation (endoscope seul, pénétromètre seul, endoscope et pénétromètre, complété(s) éventuellement d'un résistivimètre à électrodes et/ou d'un système d'échantillonnage et d'analyse de gaz du sol et/ou de bandelettes semi-quantitatives), il permet d'effectuer différents types de mesures et de caractérisation du dispositif à milieu filtrant formant le système d'épuration d'eau, et ce pour permettre la mise en oeuvre de la méthode de diagnostic selon la présente invention.

De façon avantageuse, la présente invention porte également sur l'utilisation de l'outil de diagnostic tel que défini précédemment ou de la méthode de diagnostic telle que définie précédemment, pour un dispositif à milieu filtrant du système d'épuration qui est constitué d'un filtre à sable, notamment un filtre à sable vertical, mais également un filtre à sable horizontal.

D'autres avantages et caractéristiques de l'invention ressortiront à la lecture de la description suivante faite à titre d'exemple et en référence aux dessins annexés dans lesquels :
- la figure 1 est une vue en coupe longitudinale d'un filtre à sable drainé, et
- la figure 2 est une vue schématique de dessus du filtre de la figure 1, qui illustre des emplacements possibles pour effectuer les mesures et caractérisations de la méthode de diagnostic selon l'invention.

La description qui suit porte sur des systèmes d'épuration d'eau formés de dispositifs à milieu filtrant verticaux mais la méthode proposée peut s'appliquer également à des dispositifs à milieu filtrant horizontaux, tel qu'un filtre à sable horizontal.

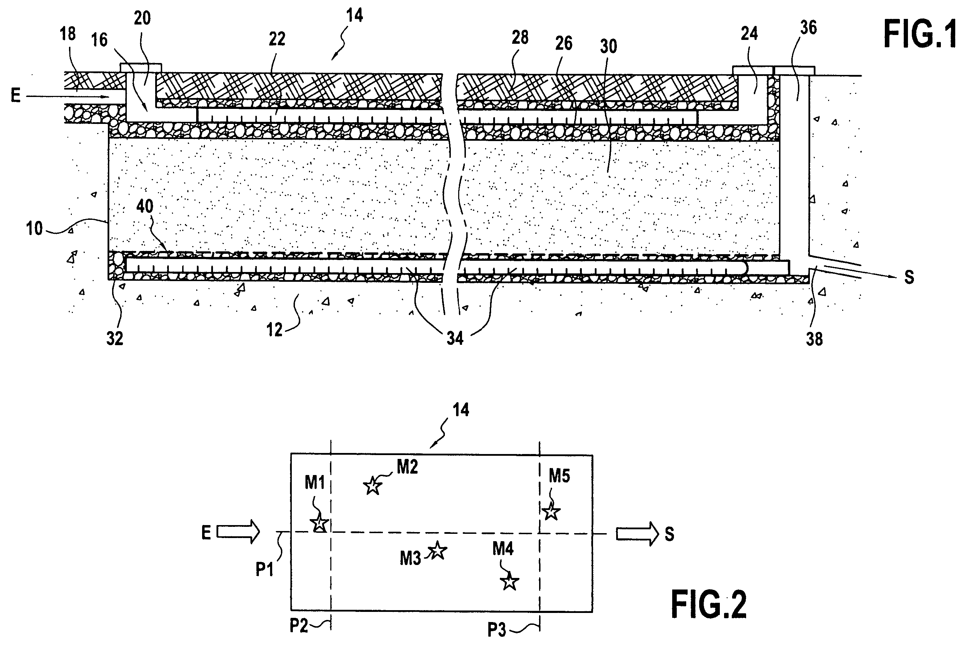

Dans le cas d'un filtre à sable vertical drainé, l'agencement, visible sur la figure 1, est le suivant :
Une fouille 10 aménagée dans le sol 12 jusqu'à une profondeur pouvant aller jusqu'à 2 ou 3 m contient le filtre à sable 14 comportant :
   - dans sa partie supérieure (en haut sur la figure 1) : le système d'épandage 16, disposé à plat, qui comprend le tuyau d'arrivée 18 des eaux prétraitées (à gauche sur la figure 1, flèche E pour l'entrée des effluents liquides), la boîte de répartition 20 qui alimente une série de tuyaux d'épandages 22 parallèles pourvus de fentes vers le bas et qui se rejoignent au niveau d'une boîte de bouclage 24 ; le système d'épandage 16 reposant sur une couche 26 de graviers et étant entouré de terre végétale de recouvrement 28 de laquelle font surface des accès à la boîte de répartition 20 et à la boîte de bouclage 24 ;
   - dans sa partie intermédiaire constituant la portion de traitement proprement dite, sur une épaisseur de l'ordre de 70 cm, du sable 30, qui est de préférence un sable lavé, débarrassé d'une majorité de ses fines (particules présentant une dimension inférieure à 80 µm) ; et
   - dans sa partie inférieure (en bas sur la figure 1) : un lit de graviers 32 contenant une série de tuyaux de collecte 34 qui se rejoignent au niveau d'une boîte de collecte 36 présentant un accès à la surface du filtre à sable 14 et reliée à un tuyau plein d'évacuation 38 (flèche S pour la sortie des eaux traitées) en direction d'un exutoire (non représenté).

De façon optionnelle une géogrille 40 sépare le lit de graviers 32 du sable 30. Il peut également être prévu (cas non représenté) un géotextile de recouvrement entre la terre végétale de recouvrement 28 et la couche de graviers 26, ainsi qu'un film imperméable recouvrant d'un seul tenant les parois et le fond de fouille (notamment dans le cas d'une roche fissurée).

Un filtre à sable non drainé se différencie de la description qui précède en ce que sont absents les éléments de la partie inférieure (lit de graviers 32, tuyaux de collecte 34, boîte de collecte 36 et tuyau d'évacuation 38), le sable 30 reposant alors sur le sol 12 (avec ou sans géogrille 40).

On présente maintenant les différents moyens de caractérisation que peut comporter l'outil de diagnostic prévu dans le cadre de la présente invention :
- le pénétromètre : il comporte un train de tiges mesurant la résistance du sol à l'enfoncement, et donnant, via un traitement informatique et des courbes de calibration pré-établies, des informations sur l'état de serrage ou compacité du sol. L'utilisation d'un pénétromètre dynamique à énergie variable facilite la mise en oeuvre de l'essai qui consiste alors à enfoncer par battage un train de tiges dans le sol. Les résultats sont fournis sous la forme d'un « pénétrogramme » donnant l'évolution de la résistance de pointe (qd) en fonction de la profondeur. Outre l'état de serrage ou compacité, cet essai donne également des informations relatives à l'épaisseur de sable du filtre et la surface couverte par le filtre.
- l'endoscope : dans le contexte de l'invention, l'endoscopie consiste à introduire un endoscope dans la cavité préalablement réalisée suite à un essai pénétrométrique ou tout autre essai de forage. On enregistre ensuite un film continu de toute la cavité à partir duquel une analyse automatique d'images est réalisée, basée sur l'étude des paramètres de couleur et de texture, afin de caractériser les différentes couches du terrain, de les différencier d'un point de vue morphologique, et de caractériser plus ou moins complètement le matériau composant la couche par exemple selon une classification géotechnique. L'essai par endoscope permet notamment de vérifier l'état de colmatage et l'état de saturation, de donner des indications sur la granulométrie et la forme des grains, et éventuellement d'aider à la détermination de la classe minéralogique. Il donne également des informations relatives à l'épaisseur de sable du filtre, à la hauteur de terre végétale de recouvrement du filtre et à la présence éventuelle de géotextile et/ou de géogrille.
- le résistivimètre à électrodes : Il s'agit de mesurer des tensions, selon divers schémas d'interrogation (quadripôles) entre des électrodes plantées superficiellement dans le sol au-dessus du filtre et dans son prolongement longitudinal ou transversal. La profondeur d'investigation d'un quadripôle donné augmente lorsque l'on accroît l'écartement des électrodes mais on perd alors en précision. Après traitement des données, on obtient un profil de résistivité formé d'une pseudo-section qui est une image verticale, comme une coupe de terrain, des variations de la résistivité apparente en fonction de la profondeur, le long d'un profil longitudinal ou transversal. Ainsi, par l'établissement d'une cartographie des différentes zones du filtre en fonction de la résistivité, cette technique permet, par indication des zones plus ou moins résistives, de connaître avec une grande vraisemblance le niveau d'humidité (il n'y a pas une stricte correspondance entre les valeurs de résistivité et celles de l'humidité). Cette cartographie des zones plus ou moins résistives oriente néanmoins l'utilisation des autres outils pour identifier les différentes régions de fonctionnement du filtre (zones peu résistives et a priori humides, zones non utilisées, ...) sur lesquelles pourront être appliqués les autres outils qui renseignent localement. Ainsi, le profil de résistivité, ou résistivité globale, donne une première indication sur la distribution de l'eau dans le filtre, sur son éventuel état de colmatage, et sur son éventuel état de saturation si tous les profils sont peu résistifs. On parle de saturation totale lorsque tous les vides laissés entre les grains de sable sont remplis d'eau. Un état de saturation peut notamment apparaître lorsqu'une nappe phréatique présente dans le sous-sol remonte temporairement jusqu'à la hauteur du filtre.

- le système d'échantillonnage et d'analyse de gaz du sol, permettant de réaliser des mesures de gaz dans le sable du filtre : l'appareil, connecté à une sonde qui peut être placée en divers endroits et profondeurs du massif filtrant, indique les teneurs respectives en O₂ (oxygène) et CO₂ (dioxyde de carbone) contenues dans la porosité du massif filtrant. Ces dernières seront indicatives d'une activité épuratoire biologique et des conditions de fonctionnement au regard des charges polluantes reçues par le filtre et des possibilités de renouvellement des gaz offertes par la conception de l'ouvrage.
- des bandelettes chimiques ou bandelettes semi-quantitatives aptes à mesurer, dans l'eau prélevée à la sortie d'un filtre drainé, la teneur en nitrates et la teneur en sels ammoniacaux.

Aux données issues de ces différents moyens de caractérisation mis en oeuvre in situ par l'outil de diagnostic selon l'invention, on ajoute toutes les informations issues d'éventuels diagnostics antérieurs et toutes les données relatives à l'historique du filtre, telles que les conditions de mise en oeuvre et composition initiale du matériau, ainsi que de caractérisations éventuelles du matériau constituant le filtre par prélèvement d'un échantillon.

On va maintenant se placer dans différents cas de figures, et illustrer la mise en oeuvre de la méthode de diagnostic selon l'invention.

### Exemple 1

On considère le cas d'un filtre neuf : il s'agit de faire le diagnostic en réception d'ouvrage, le type de sable utilisé étant connu avec plus ou moins de précision (caractéristiques physiques du matériau incluant notamment l'un ou plusieurs des paramètres suivants : les valeurs types de granulométrie, la forme des grains, le type de sable-roulé ou concassé- et sa composition) ainsi qu'éventuellement certaines des conditions de mise en oeuvre (surface du filtre, épaisseur du filtre, caractéristique mécanique telle que la gamme de compacité). D'autre part, aucune mise en service n'ayant été réalisée, il s'ensuit que l'aspect microbiologique du filtre ne peut pas être pris en considération.

Dans ce cas, à partir des caractéristiques physiques du matériau (connues et/ou obtenues par analyse d'un échantillon prélevé et/ou par réalisation d'essais d'endoscopie), de la détermination ou de la vérification de la densité (état de serrage ou compacité obtenu(e) par des essais de pénétrométrie) minimale et maximale du matériau (obtenue par réalisation d'essais de laboratoire), on peut estimer la perméabilité réelle k₁ du matériau en chaque point où un essai de pénétrométrie et/ou d'endoscopie est mené, et par là l'intervalle de perméabilité réel du matériau au sein du filtre en fonction de sa mise en oeuvre [k_{1 min} ; k_{1 max}] ainsi que le coefficient de perméabilité global formé de la moyenne des valeurs de perméabilité établie Ks .

La comparaison de cet intervalle de perméabilité réel [k_{1 min} ; k_{1 max}] (ou de chaque valeur de perméabilité établie k₁ ou du coefficient de perméabilité global) avec l'intervalle optimum de bonnes performances épuratoires [kₘᵢₙ ; kₘₐₓ] aboutit aux trois cas de figure rappelés précédemment.

### Exemple 2

Il s'agit de réaliser le diagnostic d'un filtre en place, pour lequel aucune information n'est disponible.

Dans certains cas, il est nécessaire de trouver, au préalable, l'emplacement précis du filtre et la surface qu'il couvre. La nécessaire accessibilité des regards et tampons de la fosse septique ou de la fosse toutes eaux doit guider la recherche de l'emplacement approximatif du filtre à sable sur la parcelle en l'absence de plan de récolement ou d'indications fournies par l'occupant de l'habitation. Dès ce stade, une mesure de résistivité globale et son exploitation immédiate peuvent aider si les caractéristiques et l'humidité du sol environnant diffèrent.

Dès lors que le filtre est bien localisé, un autre essai de résistivité apportera des informations complémentaires sur les dimensions approximatives du filtre et sa localisation sous la couche de sol. Ensuite, il faut en premier lieu définir la géométrie du filtre, à savoir le nombre et la nature des couches en présence ainsi que leur épaisseur. On s'appuie notamment sur les descriptions standards disponibles dans la norme XP DTU 64.1 pour commencer à interpréter les premiers indices fournis par l'essai de résistivité et/ou de géoendoscopie et/ou de pénétrométrie (résistances de pointe différentes entre la couche de terre végétale 28 recouvrant le filtre 14, l'éventuel géotextile de recouvrement, la couche de gravier 32 entourant le réseau de distribution et le sable 30).

Il s'agit au principal d'effectuer les caractérisations permettant de définir un ou plusieurs coefficient(s) de perméabilité locale du filtre qui sera(seront) chacun comparé(s) à l'intervalle de bon fonctionnement prédéfini [kₘᵢₙ ; kₘₐₓ] et d'obtenir une cartographie du filtre (avec des indications sur les zones du filtre colmatées, saturées,...). Alternativement ou en complément de ce qui précède, on effectue cette comparaison en utilisant l'intervalle des coefficients de perméabilité établies [k_{1 min} ; k_{1 max}] ou bien la moyenne des valeurs de perméabilité établies (encore dénommée coefficient de perméabilité global).

En cas de colmatage avéré, chaque coefficient de perméabilité concerné, et si nécessaire le coefficient de perméabilité global du filtre, sera calculé au prorata des épaisseurs et, si elles sont connues (notamment si les trois profils de résistivité mentionnés ci-après permettent de les estimer), au prorata des surfaces approximatives de matériau colmaté et de matériau sain.

On se reporte sur la figure 2 illustrant la méthodologie proposée :
On effectue trois profils de résistivité P1, P2 et P3 : un profil de résistivité longitudinal P1 s'étendant depuis l'entrée (flèche E) et jusqu'à la sortie (flèche S), sensiblement au milieu de la largeur du filtre 14 et deux profils de résistivité transversaux P2 et P3 respectivement situés dans le premier et dernier tiers du filtre 14.

On effectue quatre ou cinq sondages ponctuels M1, M2, M3, M4 et M5 en cinq emplacements régulièrement répartis le long du filtre entre l'entrée (flèche E) et la sortie (flèche S) et sur la largeur du filtre 14 . En chaque point de sondage M1 à M5, on réalise un ou plusieurs ou tous les essais suivants : un essai de pénétrométrie, un essai géo-endoscopique, une mesure de gaz.

Enfin, si le filtre est un filtre drainé, on effectue des tests sur bandelettes semi-quantitatives en sortie de filtre.

Le choix du ou des essais à réaliser dépend des informations disponibles relatives au filtre et de la précision attendue concernant la valeur de perméabilité qui est établie.

Grâce à tout ou partie de ces différents essais, on obtient les informations suivantes :
- La résistivité globale doit permettre dans un premier temps la localisation du filtre, la détermination de sa géométrie générale (longueur, épaisseur) et l'établissement d'une cartographie des différentes zones du filtre en fonction de l'humidité. Dans un deuxième temps elle permet de quantifier la répartition de l'humidité du filtre.
- Les essais de pénétrométrie et/ou les essais géoendocopiques doivent permettre d'identifier les différentes couches de matériaux (nature et épaisseur), de caractériser le matériau filtrant (granulométrie et état de serrage), de détecter des pathologies sévères (zones colmatées et épaisseur, zones saturées).
- Les mesures de gaz doivent permettre :
   ∘ dans un premier temps, de mettre en évidence une activité biologique indicatrice d'un développement de la biomasse épuratoire et qui est liée à une consommation d'O₂ et à un rejet de CO₂, et;
   ∘ puis dans un second temps d'évaluer si les conditions d'un bon fonctionnement *a priori* du filtre sont réunies (transferts de gaz possibles ou localisation des limitations) et l'évolution de ce fonctionnement sur plusieurs campagnes au regard du nombre de personnes présentes dans l'habitation.
- Les tests sur bandelettes semi-quantitatives doivent permettre de valider les performances du filtre en termes d'épuration des eaux. Pour un filtre drainé, donner une indication fiable sur le caractère oxydant ou réducteur des conditions de fonctionnement qui prévalent à l'intérieur de l'ensemble du filtre. Une forte teneur en nitrates et une faible teneur en sels ammoniacaux sont révélatrices d'un bon fonctionnement et très vraisemblablement de faibles concentrations résiduelles en matière organique (DBO et MES). A l'opposé, une quantité de nitrates faible et une quantité de sels ammoniacaux élevée témoignent de conditions anoxiques voire anaérobies dans les parties actives du filtre qui peuvent être localisées et confirmées par les mesures de gaz (valeurs basses d'O₂ et élevées de CO₂).

Des profils adaptés de résistivité globales doivent aussi mettre en évidence des résistivités plus faibles dans ces zones logiquement plus humides (présence de biomasse ou d'eau stagnante, le cas échéant en quantité excessive si colmatage). Cela doit aussi se confirmer par la présence d'eau sur le train de tiges du pénétromètre et l'impossibilité de procéder à des mesures endoscopiques.

Ainsi, on obtient au maximum :
- Une cartographie au moins partielle du filtre 14 fournissant ses caractéristiques géométriques et délimitant des zones de fonctionnement différent le long des profils de résistivimétrie P1 à P3, et
- En chaque point de sondage M1 à M5, la variation du ou des paramètres mesurés (par exemple résistance de pointe, résistivité et teneur en gaz) en fonction de la profondeur.

L'utilisation de banques de données résultant des nombreux essais menés au préalable et de modèles mathématiques analytiques va permettre d'associer à chaque point de sondage M1 à M5, une valeur de perméabilité k₁. Ensuite, cette valeur k₁ (ou la moyenne des valeurs k₁ établies formant le coefficient de perméabilité global) peut être comparée à la plage de valeurs de perméabilité prédéterminée [kₘᵢₙ ; kₘₐₓ] représentative d'un état de fonctionnement satisfaisant du système d'épuration.

Egalement, la plage de valeurs regroupant toutes ou parties des valeurs de perméabilité établies [k_{1 min} ; k_{1 max}] peut être comparée à la plage de valeurs de perméabilité prédéterminée [kₘᵢₙ ; kₘₐₓ] précitée.

De cette façon, on obtient un ou plusieurs indices de bon ou mauvais fonctionnement du filtre 14.

### Exemple 3

Il s'agit de la situation intermédiaire, à savoir d'un filtre en fonctionnement dont on connaît déjà tout ou partie des paramètres, établis soit lors de la réception du filtre (Exemple 1), soit lors d'un ou plusieurs précédents diagnostics (Exemple 2) car il s'agit d'un diagnostic courant sur un ouvrage suivi depuis plusieurs années.

Dans ce cas, on va refaire tout ou partie des essais menés conformément à l'exemple 2 et on déterminera si les conditions de fonctionnement se sont améliorées ou détériorées au regard de la fréquentation de l'habitation depuis les essais précédents. Si les performances, estimées directement à partir des bandelettes semi-quantitatives ou à partir d'une base de données regroupant les valeurs des autres outils, ne sont pas conformes, une réhabilitation du filtre et/ou de l'ensemble de la filière sera programmée.

Dans la description qui précède, des exemples ont été donnés en relation avec des dispositifs à milieu filtrant constitués de filtres à sable. Cependant, la présente invention est applicable à des dispositifs à milieu filtrant comportant d'autres milieux filtrants que le sable : notamment les zéolithes, les copeaux de coco....

## Revendications

1. Méthode de diagnostic du fonctionnement d'un système d'épuration d'eau de type dispositif à milieu filtrant, le matériau du milieu filtrant étant constitué de particules, comportant les étapes suivantes :
- une étape de caractérisation d'au moins un paramètre physique et/ou mécanique du dispositif à milieu filtrant par au moins un essai de pénétrométrie et/ou d'endoscopie mené au sein du matériau du milieu filtrant et permettant d'établir une valeur de perméabilité Ks (m/s),
- une étape de comparaison entre ladite valeur de perméabilité établie Ks et une plage de valeurs de perméabilité prédéterminée [kₘᵢₙ; kₘₐₓ] représentative d'un état de fonctionnement satisfaisant du système d'épuration, et
- une étape de diagnostic au cours de laquelle on attribue un indicateur du fonctionnement du dispositif à milieu filtrant en fonction du résultat de l'étape de comparaison.

2. Méthode de diagnostic selon la revendication 1, **caractérisée en ce que** la plage de valeurs de perméabilité prédéterminée représentative d'un état de fonctionnement satisfaisant appartient à l'intervalle défini par 0,3 10⁻⁵< Ks (m/s)< 0,8 10⁻².

3. Méthode de diagnostic selon l'une quelconque des revendications 1 à 2, **caractérisée en ce qu'**elle comprend la mise en oeuvre des étapes de caractérisation et de comparaison en plusieurs emplacements du dispositif à milieu filtrant, ce par quoi on obtient plusieurs indicateurs du fonctionnement du dispositif à milieu filtrant afin d'établir un diagnostic global du dispositif à milieu filtrant.

4. Méthode de diagnostic selon l'une quelconque des revendications 1 à 3, **caractérisée en ce que** l'étape de caractérisation comprend la détermination d'au moins deux paramètres physiques et/ou mécaniques représentatifs de l'état local du matériau du dispositif à milieu filtrant.

5. Méthode de diagnostic selon la revendication 4, **caractérisée en ce que** le paramètre physique représentatif de l'état local du matériau du dispositif à milieu filtrant appartient au groupe comprenant l'état de serrage (ou compacité), l'état de colmatage, l'état de saturation, la granulométrie, la forme des grains, la classe minéralogique du matériau constituant le milieu filtrant et le pourcentage de fines constituant le milieu filtrant.

6. Méthode de diagnostic selon l'une quelconque des revendications 1 à 5, **caractérisée en ce que** l'étape de caractérisation comprend la détermination d'au moins un paramètre physique et géométrique représentatif de l'état de fonctionnement du dispositif à milieu filtrant.

7. Méthode de diagnostic selon la revendication 6, **caractérisée en ce que** le paramètre physique et géométrique représentatif de l'état de fonctionnement du dispositif à milieu filtrant appartient au groupe comprenant le profil de résistivité, l'épaisseur du milieu filtrant et la surface du dispositif à milieu filtrant.

8. Méthode de diagnostic selon l'une quelconque des revendications 1 à 7, **caractérisée en ce qu'**elle comprend en outre une étape de caractérisation d'au moins un paramètre représentatif de l'activité microbiologique du dispositif à milieu filtrant.

9. Méthode de diagnostic selon la revendication 8, **caractérisée en ce que** le paramètre représentatif de l'activité microbiologique du dispositif à milieu filtrant appartient au groupe comprenant la teneur en oxygène, la teneur en dioxyde de carbone, la teneur en nitrates et la teneur en sels ammoniacaux.

10. Méthode de diagnostic selon l'une quelconque des revendications 1 à 7, **caractérisée en ce que** le dispositif à milieu filtrant du système d'épuration d'eau est un filtre à sable.

11. Outil de diagnostic du fonctionnement d'un système d'épuration d'eau de type dispositif à milieu filtrant, pour la mise en oeuvre de la méthode selon l'une quelconque des revendications 1 à 10, le matériau du milieu filtrant étant constitué de particules, **caractérisé en ce qu'**il comprend des moyens de caractérisation d'au moins un paramètre physique et/ou mécanique du dispositif à milieu filtrant comportant :
- un endoscope, et/ou
- un pénétromètre , et
un système d'analyse et de traitement des informations issues des moyens de caractérisation lorsqu' au moins un essai de pénétrométrie et/ou d'endoscopie est mené au sein du matériau du milieu filtrant, apte à établir une valeur de perméabilité Ks (m/s) et à la comparer avec une plage de valeurs de perméabilité prédéterminée [kₘᵢₙ; kₘₐₓ] représentative d'un état de fonctionnement satisfaisant du système d'épuration, et à attribuer un indicateur du fonctionnement du dispositif à milieu filtrant en fonction du résultat de l'étape de comparaison.

12. Outil de diagnostic selon la revendication 11, **caractérisé en ce que** les moyens de caractérisation comprennent en outre un résistivimètre à électrodes.

13. Outil de diagnostic selon l'une quelconque des revendications 11 à 12, **caractérisé en ce que** les moyens de caractérisation comprennent en outre un système d'échantillonnage et d'analyse de gaz du sol.

14. Outil de diagnostic selon l'une quelconque des revendications 11 à 13, **caractérisé en ce que** les moyens de caractérisation comprennent en outre des bandelettes semi-quantitatives aptes à mesurer, dans l'eau prélevée à la sortie du dispositif à milieu filtrant, la teneur en nitrates et la teneur en sels ammoniacaux.

15. Utilisation de l'outil de diagnostic selon l'une quelconque des revendications 11 à 14, pour un dispositif à milieu filtrant du système d'épuration qui est constitué d'un filtre à sable.

## Patentansprüche

1. Verfahren zur Diagnose des Betriebs eines Wasserreinigungssystems vom Typ Vorrichtung mit Filtermedium, wobei das Material des Filtermediums von Partikeln gebildet ist, umfassend die folgenden Schritte:
- einen Schritt der Kennzeichnung mindestens eines physikalischen und/oder mechanischen Parameters der Vorrichtung mit Filtermedium durch mindestens einen Penetrometrie- und/oder Endoskopie-Test, der innerhalb des Materials des Filtermediums durchgeführt wird und es ermöglicht, einen Permeabilitätswert Ks (m/s) zu erstellen,
- einen Schritt des Vergleichs zwischen dem erstellten Permeabilitätswert Ks und einem vorbestimmten Permeabilitätswertebereich [kₘᵢₙ; kₘₐₓ], der für einen zufriedenstellenden Betriebszustand des Reinigungssystems repräsentativ ist, und
- einen Schritt der Diagnose, währenddessen ein Indikator des Betriebs der Vorrichtung mit Filtermedium in Abhängigkeit von dem Ergebnis des Vergleichsschrittes zugeordnet wird.

2. Diagnoseverfahren nach Anspruch 1, **dadurch gekennzeichnet, dass** der vorbestimmte Permeabilitätswertebereich, der für einen zufriedenstellenden Betriebszustand repräsentativ ist, dem Intervall angehört, das definiert ist durch 0,3 10⁻⁵ < Ks(m/s)<0,8 10⁻².

3. Diagnoseverfahren nach einem der Ansprüche 1 bis 2, **dadurch gekennzeichnet, dass** es den Einsatz der Kennzeichnungs- und Vergleichsschritte an mehreren Stellen der Vorrichtung mit Filtermedium umfasst, weshalb mehrere Indikatoren für den Betrieb der Vorrichtung mit Filtermedium erhalten werden, um eine Gesamtdiagnose der Vorrichtung mit Filtermedium zu erstellen.

4. Diagnoseverfahren nach einem der Ansprüche 1 bis 3, **dadurch gekennzeichnet, dass** der Kennzeichnungsschritt die Bestimmung von mindestens zwei physikalischen und/oder mechanischen Parametern, die für den lokalen Zustand des Materials der Vorrichtung mit Filtermedium repräsentativ ist, umfasst.

5. Diagnoseverfahren nach Anspruch 4, **dadurch gekennzeichnet, dass** der physikalische Parameter, der für den lokalen Zustand des Materials der Vorrichtung mit Filtermedium repräsentativ ist, der Gruppe angehört, die den Dichtezustand (Kompaktheit), den Verstopfungszustand, den Sättigungszustand, die Korngröße, die Form der Körner, die mineralogische Klasse des Materials, das das Filtermedium bildet, und den Prozentsatz von Feinpartikeln, die das Filtermedium bilden, umfasst.

6. Diagnoseverfahren nach einem der Ansprüche 1 bis 5, **dadurch gekennzeichnet, dass** der Kennzeichnungsschritt die Bestimmung mindestens eines physikalischen und geometrischen Parameters, der für den Betriebszustand der Vorrichtung mit Filtermedium repräsentativ ist, umfasst.

7. Diagnoseverfahren nach Anspruch 6, **dadurch gekennzeichnet, dass** der physikalische und geometrische Parameter, der für den Betriebszustand der Vorrichtung mit Filtermedium repräsentativ ist, der Gruppe angehört, die das Widerstandsprofil, die Dicke des Filtermediums und die Oberfläche der Vorrichtung mit Filtermedium umfasst.

8. Diagnoseverfahren nach einem der Ansprüche 1 bis 7, **dadurch gekennzeichnet, dass** es ferner einen Schritt der Kennzeichnung mindestens eines Parameters, der für die mikrobiologische Aktivität der Vorrichtung mit Filtermedium repräsentativ ist, umfasst.

9. Diagnoseverfahren nach Anspruch 8, **dadurch gekennzeichnet, dass** der Parameter, der für die mikrobiologische Aktivität der Vorrichtung mit Filtermedium repräsentativ ist, der Gruppe angehört, die den Sauerstoffgehalt, den Kohlendioxidgehalt, den Nitratgehalt und den Gehalt an Ammoniaksalzen umfasst.

10. Diagnoseverfahren nach einem der Ansprüche 1 bis 7, **dadurch gekennzeichnet, dass** die Vorrichtung mit Filtermedium des Wasserreinigungssystems ein Sandfilter ist.

11. Werkzeug zur Diagnose des Betriebs eines Wasserreinigungssystems vom Typ Vorrichtung mit Filtermedium für den Einsatz des Verfahrens nach einem der Ansprüche 1 bis 10, wobei das Material des Filtermediums von Partikeln gebildet ist, **dadurch gekennzeichnet, dass** es Mittel zur Kennzeichnung mindestens eines physikalischen und/oder mechanischen Parameters der Vorrichtung mit Filtermedium besitzt, umfassend:
- ein Endoskop und/oder
- ein Penetrometer, und
- ein System zur Analyse und Bearbeitung der von den Kennzeichnungsmitteln stammenden Informationen, wenn mindestens ein Penetrometrie- und/oder Endoskopie-Test in dem Material des Filtermediums durchgeführt wird, der geeignet ist, einen Permeabilitätswert Ks (m/s) zu erstellen und mit einem vorbestimmten Permeabilitätswertebereich [kₘᵢₙ; kₘₐₓ] zu vergleichen, der für einen zufriedenstellenden Betriebszustand des Reinigungssystems repräsentativ ist, und einen Indikator des Betriebs der Vorrichtung mit Filtermedium in Abhängigkeit von dem Ergebnis des Vergleichsschrittes zuzuordnen.

12. Diagnosewerkzeug nach Anspruch 11, **dadurch gekennzeichnet, dass** die Kennzeichnungsmittel ferner einen Widerstandsmesser mit Elektroden umfassen.

13. Diagnosewerkzeug nach einem der Ansprüche 11 bis 12, **dadurch gekennzeichnet, dass** die Kennzeichnungsmittel ferner ein System zur Probenahme und Gasanalyse des Bodens umfassen.

14. Diagnosewerkzeug nach einem der Ansprüche 11 bis 13, **dadurch gekennzeichnet, dass** die Kennzeichnungsmittel ferner halbquantitative Teststreifen umfassen, die geeignet sind, in dem am Ausgang der Vorrichtung mit Filtermedium entnommenen Wasser den Gehalt an Nitraten und den Gehalt an Ammoniaksalzen zu messen.

15. Verwendung eines Diagnosewerkzeugs nach einem der Ansprüche 11 bis 14 für eine Vorrichtung mit Filtermedium des Reinigungssystems, die von einem Sandfilter gebildet ist.

## Claims

1. A method of diagnosing the operation of a water purification installation of the filter medium device type, the material of the filter medium being made up of particles, the method comprising the following steps:
• a characterization step of characterizing at least one physical and/or mechanical parameter of the filter medium device by at least a penetrometer and/or endoscopy test carried out within the material of the filter medium and to establish a permeability value Ks (expressed in m/s);
• a comparison step of comparing said established permeability value Ks with a predetermined range [kₘᵢₙ; kₘₐₓ] of permeability values representing a satisfactory operating state of the purification installation; and
• a diagnosis step during which the filter medium device is assigned an operation indicator according to the result of the comparison step.

2. A diagnostic method according to claim 1, **characterized in that** the predetermined range of permeability values representing a satisfactory operating state belongs to the range defined as follows: 0.3×10⁻⁵ m/s < Ks < 0.8×10⁻² m/s.

3. A diagnostic method according to claim 1 or claim 2, **characterized in that** it includes executing the characterization and comparison steps at a plurality of locations of the filter medium device, whereby a plurality of indicators of the operation of the filter medium device are obtained in order to establish a global diagnosis of the filter medium device.

4. A diagnostic method according to any one of claims 1 to 3, **characterized in that** the characterization step includes determining at least two physical and/or mechanical parameters representing the local state of the material of the filter medium device.

5. A diagnostic method according to claim 4, **characterized in that** the physical parameter representing the local state of the material of the filter medium device belongs to the group comprising the tightness (or compaction) state, the clogging state, the saturation state, the particle sizes, the shape of the grains, the mineralogical class of the material constituting the filter medium, and the percentage of fines constituting the filter medium.

6. A diagnostic method according to any one of claims 1 to 5, **characterized in that** the characterization step includes determining at least one physical and geometrical parameter representing the operating state of the filter medium device.

7. A diagnostic method according to claim 6, **characterized in that** the physical and geometrical parameter representing the operating state of the filter medium device belongs to the group comprising the resistivity profile, the thickness of the filter medium, and the area of the filter medium device.

8. A diagnostic method according to any one of claims 1 to 7, **characterized in that** it further includes a step of characterizing at least one parameter representing the microbiological activity of the filter medium device.

9. A diagnostic method according to claim 8, **characterized in that** the parameter representing the microbiological activity of the filter medium device belongs to the group comprising the oxygen concentration, the carbon dioxide concentration, the nitrates concentration, and the ammonia salts concentration.

10. A diagnostic method according to any one of claims 1 to 7, **characterized in that** the purification filter medium device is a sand filter.

11. A tool for diagnosing the operation of a water purification installation of the filter medium device type for use in the method according to any one of claims 1 to 10, the material of the filter medium being made up of particles, **characterized in that** it includes means for characterizing at least one physical and/or mechanical parameter of the filter medium device, including:
• an endoscope; and/or
• a penetrometer; and
• a system for analyzing and processing information from the characterization means when at least a penetrometer and/or endoscopy test is carried out within the material of the filter medium, adapted to establish a permeability value Ks (m/s) and to compare it with a predetermined range of permeability values [kₘᵢₙ; kₘₐₓ] representing a satisfactory operating state of the purification installation, and means for assigning an indicator of the operation of the filter medium device as a function of the result of the comparison step.

12. A diagnostic tool according to claim 11, **characterized in that** the characterization means further include a resistivity meter using electrodes.

13. A diagnostic tool according to claim 11 or claim 12, **characterized in that** the characterization means further include a soil gas sampling and analysis system.

14. A diagnostic tool according to any one of claims 11 to 13, **characterized in that** the characterization means further include semi-quantitative strips adapted to measure the nitrates concentration and the ammonia salts concentration in water sampled at the output of the filter medium device.

15. Use of the diagnostic tool according to any one of claims 11 to 14 for a purification installation of the filter medium device type, which filter medium device consists of a sand filter.
